Europäisches Patentamt

European Patent Office

Office européen des brevets

(19)

(11) Publication number: **0 231 684 B1**

# EUROPEAN PATENT SPECIFICATION

(12)

(45) Date of publication of patent specification: **19.06.91**    (51) Int. Cl.⁵: **G01N 30/56**

(21) Application number: **86402709.9**

(22) Date of filing: **08.12.86**

(54) **Chromatography columns with cast porous plugs and methods of fabricating same.**

(30) Priority: **11.12.85 US 807729**

(43) Date of publication of application:
**12.08.87 Bulletin 87/33**

(45) Publication of the grant of the patent:
**19.06.91 Bulletin 91/25**

(84) Designated Contracting States:
**DE FR GB**

(56) References cited:
**GB-A- 2 128 099**
**US-A- 2 733 135**
**US-A- 3 250 395**
**US-A- 3 692 669**

(73) Proprietor: **LEE SCIENTIFIC, INC.**
**4426 South Century Drive**
**Salt Lake City Utah 84123-2513(US)**

(72) Inventor: **Cortes, Hernan J.**
**2417 Lambros Drive**
**Midland Michigan 48640(US)**
Inventor: **Pfeiffer, Curtis D.**
**5001 Dale Street**
**Midland Michigan 48640(US)**
Inventor: **Stevens, Timothy S.**
**5102 Foxcroft Street**
**Midland Michigan 48640(US)**
Inventor: **Richter, Bruce E.**
**1160 South Croff Circle**
**Orem Utah 84058(US)**

(74) Representative: **Peuscet, Jacques et al**
**Cabinet Peuscet 68, rue d'Hauteville**
**F-75010 Paris(FR)**

## Description

The present invention relates to chromatography columns and methods of fabricating chromatography columns. More particularly, the instant invention relates to bed supports and restrictors for chromatography columns and to methods of fabricating such.

The trend in chromatography has been to move to higher pressures and smaller diameter columns for efficient solvent utilization and high column efficiency in high-performance liquid chromatography and for high column efficiency in supercritical fluid chromatography. By utilizing long chromatography columns or tubes, greater resolving power can be realized, allowing complex mixtures to be effectively separated.

Chromatography tubes having inner diameters in the range of from 10 to 5000 $\mu$m are utilized to accomplish state-of-the art chromatography. By having small inner diameters, generally not greater than about 1000 $\mu$m the volume defined by a chromatography column is minimized. Accordingly, minute samples can be analyzed with state-of-the-art chromatography columns. In order to increase the resolution of the sample components dissolved in a solvent within a chromatography column, the lengths of state-of-the-art columns are many orders of magnitude greater than the diameters thereof. For example, a chromatography column utilizing a liquid solvent has an inside diameter of 150 to 500 $\mu$m and a length of approximately 1 meter, whereas a chromatography column utilized with supercritical fluid chromatography has a length of about 20 meters and an inside diameter of approximately 50 to 150$\mu$m.

Generally, a chromatographic column is packed with a sorbent which forms a chromatography bed. For example, the sorbent may be composed of microparticles such as $C_{18}$ bonded phase particles having outer diameters in the range of from 1 to 10 $\mu$m which are suspended in a slurry and injected under pressure into the bore of the column. During injection of the slurry and during operation of the column, one end of the column must be fitted with a plug which may be, for example, a porous plug, in order to retain the sorbent therein. According to current practices, this is accomplished by inserting a glass wool plug in the downstream end of the column in order to form a support for the bed of sorbent. This approach to plugging the outlet end of the column has not proved totally satisfactory in that it is very difficult to insert the glass wool plug in such a small opening. Moreover, since there is nothing binding the glass wool plug to the wall of the column, the plugs on occasion are ejected from the columns due to pressure created within the columns during use thereof. This problem is addressed in United States Patent No. 4,483,773 issued November 20, 1984 to Yang, wherein alternatives to glass wool plugs are disclosed. These alternatives include utilizing narrow-bore tubing, wire, particles of a diameter larger than the constituent particles of the sorbent, and inserting a narrow-bore plug into a sleeve attached to the outside of the column. The patent to Yang clearly states that there is difficulty with the glass wool plug concept and Yang herefore resorts to a host of alternative solutions. Since the solvent in which the sample under analysis is dissolved must pass through the plug, the configuration of the plug directly affects the efficiency of the column. In part, the efficiency of the column is determined by the speed at which the solvent moves through the column and the amount of solvent which is utilized for a particular test. Generally, glass wool plugs provide high efficiency. Consequently, a desirability of any alternative to glass wool plugs should have an efficiency which at least approaches that of glass wool plugs.

In columns used for supercritical fluid chromatography (SFC) a restrictor is placed at the exit end of the chromatographic column. According to current practice, the restrictor is configured from a small-diameter capillary tube. Generally, the capillary tube forming the restrictor is butted or placed end-to-end against the chromatographic column and held in place by a union fitting or "butt-connector." Capillary tubing of Pyrex glass, fused silica and platinum iridium have been used as restrictors. The small-diameter capillary tube allows slow decompression of the mobile phase, or solvent, before detection. However, with this approach, relatively involatile solute molecules associate and condense along the walls of the small-diameter capillary tube. This results in both clogging of the opening and spiked peaks seen by the detector. In addition, laser-drilled orifices have been used as restrictors, but they are prone to blockage and breakage. Generally, these prior art restrictor designs are not entirely satisfactory in that they are separate from the columns and must be butted therewith or otherwise held in engagement therewith.

The prior art also includes a number of teachings of porous plugs used with chromatography columns. For example U.S. Patent No 3,440,864 discloses utilizing a porous stainless steel or fiberglass disc inserted into a chromatography column. U.S. Patent No. 3,771,659 discloses a porous plug of any naturally porous or artificially porous material, such as Teflon, which is used with a chromatographic column. U.S. Patent No. 4,142,856 discloses a disc of a microporous material formed from a polymer such as high-density polyethylene, which is inserted into a column. U.S.

Patent No. 4,181,853 utilizes a porous plug of sintered steel frit which is used in a chromatography system. U.S. Patent No. 4,399,032 discloses a sintered metal terminator element having an outer rim which alledgedly provides a seal with an outlet union retaining it. Above US-A-4483773 (see also GB Patent 2 128 099) relates to a chromatographic column in which the plug is constituted by a wire insert or by a thick walled fused silica column having a central core. The plug can be inserted into the column or in a sleeve attached to the outside of the column. US Patent 3 250 395 relates to a chromatographic column in which, to prevent leakage of fluid or of resin, a filter or a porous disc and a special gasket are provided. The filter can be made out of ceramic. US Patent 3 692 669 describes a tube for dry microcolumn chromatography closed by a porous plug formed of a soft felted sheet of ceramic. Each of these patents disclose arrangements of relative structural complexity wherein the plugs do not have the advantage of being "unitary" with the chromatographic column so that they do not effectively seal with the walls of the column.

U.S. Patent n° 2,723,756 discloses a cast-in-place plug made of plaster of Paris which is inserted in a large-diameter support cylinder. However, the plug is not actually in a chromatographic tube since the chromatographic column of this invention does not include a tube.

In view of the aforementioned considerations, it is an object of the instant invention to provide a new and improved plug for chromatographic columns which can be used as a sorbent bed support or as a restrictor. It is a further object of the instant invention to provide new and improved processes for forming such plugs.

The instant invention contemplates a process for fabricating a chromatographic column including a capillary tube of a silica material, the tube having an outlet end and an inner wall, characterized by the fact that the process comprises the steps of :

(a) providing a chemically fusible material which is microporous upon casting and which adheres to the inner wall of the tube upon fusing, which chemically fusible material comprises a composition having a silicate component,

(b) depositing a quantity of the chemically fusible material in the tube; and

(c) casting a plug in situ by fusing the material within the tube and adhering the material to the inner wall of the tube to form a solid microporous mass.

A sorbent is then packed into the capillary tube upstream of the plug or the inner wall of the tube is coated with a liquid stationary phase.

In accordance with a preferred embodiment of the invention, the afore-described process is accomplished by preparing a soluble silicate solution and separating the gels therefrom. The solution is then deposited within the open end ot the tube and the open end of the tube heated to fuse the solution and thereby form a plug of porous ceramic material which is integral with the open end of the tube.

In particular, the invention contemplates a chromatographic column including a capillary tube of a silica material, the tube containing a chromatographic bed and having an inner wall, inlet end and outlet end, a bed support positioned at the outlet end for supporting the chromatographic bed, the bed support being made of a porous ceramic material, characterized by the fact that the bed support is a plug which has been cast in situ at the outlet end and which adheres to the inner wall of the tube, the ceramic material of the plug being obtained by fusing a chemically fusible material comprising a composition having a silicate component.

The instant invention further contemplates a chromatographic column, for use in supercritical fluid chromatography, including a capillary tube of a silica material, the tube having an inner wall and containing a chromatographic bed or a liquid stationary phase coated or bonded to the inner wall, an inlet end and an outlet end, the outlet end including a restrictor, which restrictor allows controlled expansion of a supercritical fluid, characterized by the fact that the restrictor being configured as a plug of microporous ceramic materiel which has been cast in situ at the outlet end of the tube and which adheres to the inner wall of the tube, the ceramic material of the plug being obtained by fusing a chemically fusible materiel comprising a composition having a silicate component.

Various other objects, features and attendant advantages of the present invention will become more fully appreciated as the same becomes better understood when considered in conjunction with the accompanying drawings, in which like reference characters designate the same or similar parts throughout the several views, and wherein:

Figure 1 is a perspective view of a chromatographic column which utilizes the principles of the instant invention.

Figure 2 is an enlarged cross-sectional view of the outlet end of the column of Figure 1 showing a microporous ceramic plug disposed in the outlet end and adhered to the inner wall of the column forming the tube.

Figures 3A, 3B, 3C and 3D show the steps of fabricating the end plug shown in Figure 2 wherein the outlet end of the column is immersed into a solution of fusible material, the fusible material is fused by the application of heat and a sorbent is thereafter injected into the tube.

Figure 4 is an enlarged cross-sectional view of another embodiment of the invention, wherein a microporous ceramic plug is formed in a section of capillary tube which is then abutted to the end of the chromatographic column.

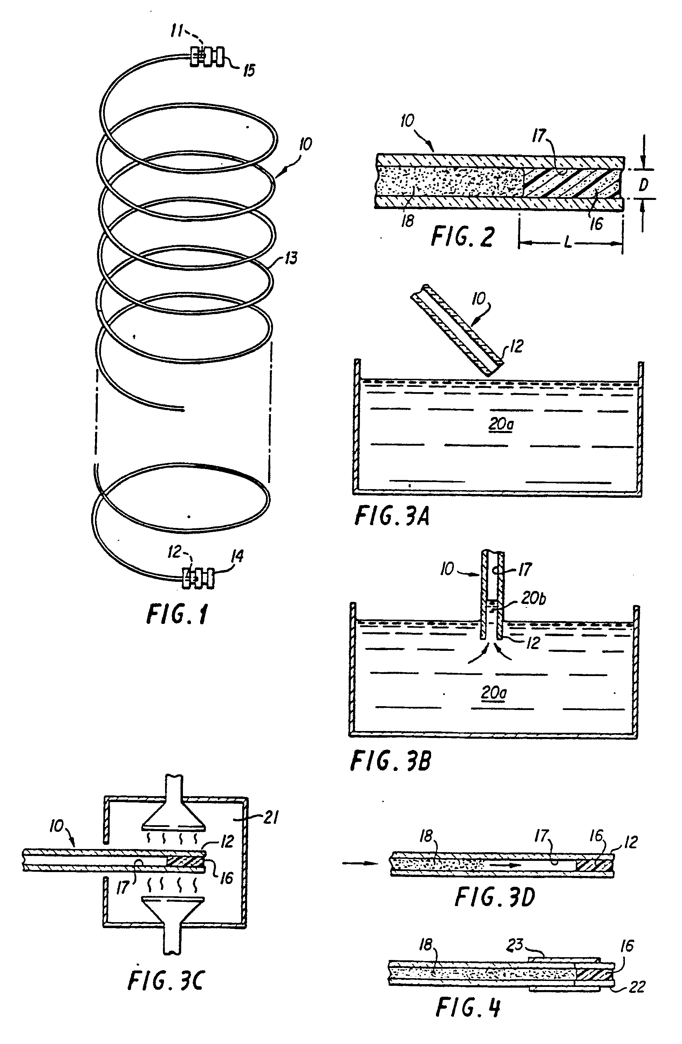

Referring now to Fig. 1, there is shown a chromatographic column, designated generally by the numeral 10, which has an inlet end 11, an outlet end 12, and an intermediate portion 13 which contains a sorbent or coating on the inner wall for performing chromatographic analysis. Attached to the inlet end 11 of the chromatographic column 10 is a diagramatically illustrated connector 15 which connects the column to the material to be analyzed, which material is dissolved or dispersed in a solvent. Connected to the outlet end 12 of the column 10 is a connector 14 for connecting the column to analytical equipment. In operation, the solvent is applied under pressure through the connector 15 so as to traverse the column 10 and exit through the outlet end 12 and the connector 14.

The column 10 is conveniently configured as a spiral because its length is usually several orders of magnitude greater than its diameter (specifically, its inner diameter). For example, if the column 10 is used for liquid chromatography, the inner diameter may be on the order of from 10 to 1000 $\mu$m, preferably from 150 to 500 $\mu$m, while the length of the column is not critical and may be, for example, approximately 100 cm. On the other hand, if the chromatographical column 10 is used for supercritical fluid chromatography, the length of the column is not critical and may be approximately 20 meters, while the inner diameter may be from 10 to 500 $\mu$m, preferably from 50 to 150 $\mu$m. In accordance with preferred practice, the chromatographic column 10 is fabricated of fused silica material in accordance with well-known procedures and methods and has a very smooth inner wall surface.

Referring now to Figure 2, the outlet end 12 of tube 10 is shown greatly enlarged. Within the outlet end 12 of the tube 10, a porous ceramic plug 16 of fused material is disposed. The plug 16 is adhered to the smooth inner wall surface 17 of the tube 10 and extends back from the outlet end 11 of the tube a distance "L" which varies in accordance with the purpose for which the plug is used. For example, if the plug 16 is used in a tube 10 that is part of a supercritical fluid chromatography system, the distance "L" might be 0.5 mm to 2 cm. If the plug 16 is being used for a liquid chromatography system, the distance "L" might be 0.5-3.0 mm. The selection of the distance "L" is also dependent on the particular inner diameter of the tube "D".

Disposed behind the porous ceramic plug 16 is sorbent bed 18, which is normally injected into the tube 10, or a liquid stationary phase coated or bonded to the inner wall subsequent to forming the plug. Since the plug is porous, a suspension of sorbent 18 can be easily injected into the tube 10.

Referring now to Figures 3A to 3D, there is shown a preferred method for forming the plug 16. A solution 20a containing, for example, potassium silicate, such as that known as Kasil™ Number 1, is provided. The solution is centrifuged to remove gels and the end 12 of the chromatographic column 10 is simply immersed therein as shown in Figure 3b. A portion 20b of the solution is drawn up into the tube 10 by capillary action or introduced with, for example, a syringe. As shown in Figure 3C, the end 12 of the tube 10 with the fusible silicate solution 20b is then heated by conventional means, such as a steambath 21, in order to fuse the solution 20b into the solid porous ceramic plug 16, while adhering the material of the plug 16 to the inner wall 17 of the tube 10. Thereafter, the sorbent bed material 18 is packed into the tube 10.

The plug 16 may be used for two different purposes. If the chromatographic column 10 is being used for liquid chromatography, then the plug 16 serves as a support for the sorbent bed 18 so as to retain the sorbent bed 18 in the column both during packing of the sorbent bed into the column and during use of the column. The plug 16 withstands pressures applied to the inlet 11 end of the column 10 in excess of 8,000 psi while having a chromatographic efficiency similar to the chromatographic efficiency of the glass wool plugs of the prior art.

The plug 16 may also be used as a restrictor in the outlet end of a chromatography tube 10 used for supercitical fluid chromatography. In this embodiment of the invention, it has been found that a plug 16 used as a restrictor minimizes the distance over which decompression of the supercritical fluid solvent occurs while increasing drastically the number of paths through the restrictor that the solvent may travel. Accordingly, molecular association and condensation is minimized and at best totally eliminated. Consequently, line clogging is avoided as well as detector "spiking". In addition, the plug 16 does not cause band spreading. The cast in situ, or cast-in-place, porous ceramic plug 16 is of special interest in reducing spiking which occurs with higher molecular weight samples and in reducing the exit clogging which also occurs with high molecular weight samples. While a restrictor 16 is shown in Figure 2 which is cast in place directly to the chromatographic tube 10, the restrictor may be formed on a separate portion of silica capillary tube 22 and the separate portion coupled to the outlet end 12 of the chromatographic tube 10 with a coupling 23.

While the plug 16 shown in the drawings and discussed thus far herein extends completely across the cross-section of the outlet end 12 of the tube 10, it is within the scope of the invention to interrupt this extension by incorporating fibers, hollow tubes and the like within the plug.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever. In the following examples, all temperatures are set forth uncorrected in degrees Celsius; unless otherwise indicated, all parts and percentages are by weight.

Example 1

A support bed or support structure for supporting sorbent within a fused silica liquid chromatographic column having an internal diameter of 250 $\mu$m and a length of 99 cm was prepared by immersing the outlet end of the column in a solution of potassium silicate, removing the outlet end from the potassium silicate and heating the outlet end from the potassium silicate and heating the outlet end in a steam bath for approximately one hour to cause polymerization of the potassium silicate solution. The potassium silicate solution was a solution of KasilTM Number 1 having a weight ratio of silicon dioxide to water of 2.50 and a density of 29.80° $\overline{Be}$-(Baumé) to which formamide was added in a ratio of 85 percent Kasil Number 1 to 15 percent formamide. Before immersing the outlet end of the chromatographic column in the solution, the solution was centrifuged to precipitate gels.

After the porous ceramic plug, according to the instant invention, was formed in the outlet end of the chromatographic tube in order to form a support for the sorbent, a pressure of $5,52 \cdot 10^7$ Pa (8,000 psi) was supplied to the inlet end of the column in order to test the integrity of the plug and the adherence of the plug material to the very smooth interior surface of the chromatographic tube.

The chromatographic tube was then packed with ZORBAX® ODS, 7 $\mu$m particle size (DuPont, Wilmington, DE, USA) and tested. In the initial test, the length of the plug forming the support was approximately 4 cm. The resulting chromatogram indicated very poor efficiency, much lower than that obtained by using the prior art glass wool approach.

Example 2

All of the steps of Example 1 were repeated with the exception of reducing the length of the plug to 1 mm. Upon filling the chromatographic tube with sorbent and testing the tube, very good results were attained and efficiencies comparable to using a glass wool plug, but without the drawbacks of using glass wool plugs.

Example 3

A chromatographic column used in supercritical fluid chromatography was provided with a porous ceramic plug for use as a restrictor in the outlet end of the column. As with examples 1 and 2, a solution KasilTM Number 1 and formamide was prepared in a ratio of 85 percent Kasil Number 1 to 15 percent formamide. The solution was centrifuged to precipitate the gels. A portion of fused silica capillary material having a length of about 2 cm and an internal diameter of 80 $\mu$m was immersed into the solution and a plug cast therein by heating the capillary material for about 1 hour in a steam bath. The capillary material was then connected to the end of an analytical chromatographic column having an internal diameter of 80 $\mu$m, a length of 19 meters and a film of polysiloxane stationary phase having a thickness of 0.25 $\mu$m bonded to the inner surface of the tube. The column was tested by running high molecular weight hydrocarbons (paraffin wax) therethrough. In the resulting test, no spiking occurred and there was no band spreading attributable to the fused, microporous plug. Moreover, there was no clogging. The length of the microporous plug in this particular example was about 2 cm long. The sample analyzed was a mixture of $C_{14}$, $C_{18}$, $C_{20}$, $C_{22}$, $C_{24}$ and $C_{26}$ n-alkanes.

The preceding examples can be repeated with similar success by substituting the generically or specifically described reactants and/or operating conditions of this invention for those used in the preceding examples.

From the foregoing description, one skilled in the art can easily ascertain the essential characteristics of this invention, and without departing from the scope of the appended claims, can make various changes and modifications of the invention to adapt it to various usages and conditions.

**Claims**

1. A process for fabricating a chromatographic column including a capillary tube (10, 22) of a silica material, the tube having an outlet end (12) and an inner wall (17), characterized by the fact that the process comprises the steps of :

(a) providing a chemically fusible material which is microporous upon casting and which adheres to the inner wall (17) of the tube (10, 22) upon fusing, which chemically fusible material comprises a composition having a silicate component,
(b) depositing a quantity of the chemically fusible material in the tube; and
(c) casting a plug (16) in situ by fusing the material within the tube (10, 22) and adhering the material to the inner wall (17) of the tube to form a solid microporous mass.

2. The process of claim 1, characterized by the fact that the fusible material is a heat fusible material and wherein the step of casting the plug (16) in situ includes heating the material.

3. The process of claim 2, characterized by the fact that the heat fusible material is prepared from a soluble silicate solution.

4. The process of claim 3, characterized by the fact that the solution further includes formamide mixed with the silicate.

5. The process according to any one of claims 3 or 4, characterized by the fact that the silicate is potassium silicate.

6. The process according to any one of claims 1 to 5, characterized by the fact that the step of depositing the fusible material in the tube (10, 22) comprises immersing the outlet end (12) of the tube in the fusible material and allowing the material to be drawn into the tube.

7. The process according to any one of claims 1 to 6, characterized by the fact that said plug is cast in the end of the tube which forms an outlet end (12) for the chromatographic column.

8. The process of claim 7, characterized by the fact that the tube (10, 22) has an inner diameter in the range of 10 $\mu$m to 1000 $\mu$m.

9. The process according to any one of claims 1 to 8, characterized by the fact that the process comprises after step (c) further the step of filling the tube (10) with a sorbent bed (18).

10. The process according to any one of claims 1 to 8, characterized by the fact that the process comprises after step (c) further the step of coating or bonding the inner wall (17) of the tube with a liquid stationary phase.

11. A chromatographic column including a capillary tube (10, 22) of a silica material, the tube containing a chromatographic bed (18) and having an inner wall (17), inlet end (11) and outlet end (12), a bed support positioned at the outlet end (12) for supporting the chromatographic bed (18), the bed support being made of a porous ceramic material, characterized by the fact that the bed support is a plug (16) which has been cast in situ at the outlet end (12) and which adheres to the inner wall (17) of the tube, the ceramic material of the plug (16) being obtained by fusing a chemically fusible material comprising a composition having a silicate component.

12. The chromatographic column of claim 11, characterized by the fact that the silicate component is potassium silicate.

13. The chromatographic column according to any one of claims 11 or 12, characterized by the fact that the tube has an interior diameter in the range of 10 $\mu$m to 1000 $\mu$m.

14. The chromatographic column of claim 13, characterized by the fact that the tube has an interior diameter in the range of 150 $\mu$m to 500 $\mu$m.

15. The chromatographic column according to any one of claims 11 to 14, characterized by the fact that the length of the plug is in the range of 0,5 to 3,00 mm.

16. The chromatographic column according to any one of claims 11 to 15, characterized by the fact that the plug extends uninterrupted completely across the inner diameter of the tube.

17. The chromatographic column according to any one of claims 11 to 15, characterized by the fact that the plug extending across the inner diameter of the tube is interrupted by at least one object disposed within the plug.

18. A chromatographic column, for use in supercritical fluid chromatography, including a capillary tube (10, 22) of a silica material, the tube having an inner wall (17) and containing a chromatographic bed (18) or a liquid stationary phase coated or bonded to the inner wall (17), an inlet end (11) and an outlet end (12), the outlet end (12) including a restrictor, which restrictor allows controlled expansion of a supercritical fluid, characterized by the fact that the restrictor being configured as a plug (16) of microporous ceramic materiel which has been cast in situ at the outlet end (12) of the tube and which adheres to the inner wall (17) of the tube, the ceramic material of the plug (16) being obtained by fusing a chemically fusible materiel comprising a composition having a silicate component.

19. The chromatographic column of claim 18, characterized by the fact that the silicate component is potassium silicate.

20. The chromatographic column according to any one of claims 18 or 19, characterized by the fact that the tube (10, 22) has an inner diameter in the range of 10 $\mu$m to 500 $\mu$m.

21. The chromatographic column of claim 20, characterized by the fact that the tube (10, 22) has an inner diameter in the range of 50 $\mu$m to 150 $\mu$m.

22. The chromatographic column according to any one of claims 18 to 21, characterized by the fact that the plug (10, 22) acting as a restrictor has a length in the range of 0.5 to 2 cm.

## Revendications

1. Procédé de fabrication d'une colonne de chromatographie comprenant un tube capillaire (10, 22) en matériau siliceux, le tube ayant une extrémité de sortie (12) et une paroi interne (17), caractérisé par le fait que le procédé comprend les étapes consistant à :
    a) fournir un matériau chimiquement fusible qui est microporeux au moulage et qui adhère par fusion à la paroi interne (17) du tube (10, 22), le matériau chimiquement fusible comprenant une composition ayant un composant silicate ;
    b) déposer une quantité dudit matériau chimiquement fusible dans le tube ; et
    c) mouler in situ un bouchon (16) par fusion dudit matériau dans le tube (10, 22), le matériau adhérant à la paroi interne (17) du tube pour former une masse solide microporeuse.

2. Procédé selon la revendication 1, caractérisé par le fait que le matériau fusible est un matériau fusible à chaud et que l'étape de moulage in situ du bouchon (16) comporte le chauffage du matériau.

3. Procédé selon la revendication 2, caractérisé par le fait que le matériau fusible à chaud est préparé à partir d'une solution de silicate soluble.

4. Procédé selon la revendication 3, caractérisé par le fait que la solution contient également du formamide en mélange avec le silicate.

5. Procédé selon l'une des revendications 3 ou 4, caractérisé par le fait que le silicate est du silicate de potassium.

6. Procédé selon l'une des revendications 1 à 5, caractérisé par le fait que l'étape de dépôt du matériau fusible dans le tube (10, 22) comprend le fait d'immerger l'extrémité de sortie (12) du tube dans le matériau fusible et de permettre audit matériau d'être introduit dans le tube.

7. Procédé selon l'une des revendications 1 à 6, caractérisé par le fait que ledit bouchon est moulé dans l'extrémité du tube, qui forme une extrémité de sortie (12) de la colonne de chromatographie.

8. Procédé selon la revendication 7, caractérisé par le fait que le tube (10, 22) a un diamètre interne compris entre 10 $\mu$m et 1000 $\mu$m.

9. Procédé selon l'une des revendications 1 à 8, caractérisé par le fait que le procédé comporte après l'étape (c), une étape supplémentaire de remplissage du tube (10) avec un lit absorbant (18).

10. Procédé selon l'une des revendications 1 à 8, caractérisé par le fait que le procédé comporte après l'étape (c), une étape supplémentaire de revêtement ou de liaison de la paroi interne (17) du tube avec une phase liquide stationnaire.

11. Colonne de chromatographie comprenant un tube capillaire (10, 22) en matériau siliceux, le tube contenant un lit (18) chromatographique et ayant une paroi interne (19), une extrémité (11) d'entrée et une extrémité (12) de sortie, un support de lit disposé à l'extrémité de sortie (12) pour supporter le lit chromatographique (18), le support de lit étant réalisé en un matériau céramique poreux, caractérisée par le fait que le support de lit est un bouchon (16), qui a été moulé in situ à l'extrémité de sortie (12) et qui adhère à la paroi interne (17) du tube, le matériau céramique du bouchon (16) étant obtenu par fusion d'un matériau chimiquement fusible comprenant une composition ayant un composant silicate.

12. Colonne de chromatographie selon la revendication 11, caractérisée par le fait que le silicate est du silicate de potassium.

13. Colonne de chromatographie selon l'une des revendications 11 ou 12, caractérisée par le fait que le tube a un diamètre interne compris entre 10 $\mu$m et 1000 $\mu$m.

14. Colonne de chromatographie selon la revendication 13, caractérisée par le fait que le tube a un diamètre interne compris entre 150 $\mu$m et 500 $\mu$m.

15. Colonne de chromatographie selon l'une des revendications 11 à 14, caractérisée par le fait que la longueur du bouchon est comprise entre 0,5 et 3,00 mm.

16. Colonne de chromatographie selon l'une des revendications 11 à 15, caractérisée par le fait que le bouchon s'étend sans interruption sur tout le diamètre interne du tube.

17. Colonne de chromatographie selon l'une des revendications 11 à 15, caractérisée par le fait que le bouchon s'étendant sur tout le diamètre interne du tube est interrompu par au moins un objet disposé à l'intérieur du bouchon.

18. Colonne de chromatographie pour chromatographie fluide supercritique, contenant un tube (10, 22) capillaire en matériau siliceux, le tube ayant une paroi interne (17) et contenant un lit chromatographique (18) ou une phase liquide stationnaire recouvrant la paroi interne (17) ou liée à celle-ci, une extrémité d'entrée (11) et une extrémité de sortie (12), l'extrémité de sortie (12) contenant un réducteur, qui permet de régler l'expansion du fluide supercritique, caractérisée par le fait que le réducteur est formé par un bouchon (16) de matériau céramique microporeux qui a été moulé in situ à l'extrémité de sortie (12) du tube et qui adhère à la paroi interne (17) du tube, le matériau céramique du bouchon (16) étant obtenu par fusion d'un matériau chimiquement fusible comprenant une composition ayant un composant silicate.

19. Colonne de chromatographie selon la revendication 18, caractérisée par le fait que le silicate est du silicate de potassium.

20. Colonne de chromatographie selon l'une des revendications 18 ou 19, caractérisée par le fait que le tube (10, 22) a un diamètre interne compris entre 10 $\mu$m et 500 $\mu$m.

21. Colonne de chromatographie selon la revendication 20, caractérisée par le fait que le tube (10, 22) a un diamètre interne compris entre 50 $\mu$m et 150 $\mu$m.

22. Colonne de chromatographie selon l'une des revendications 18 à 21, caractérisée par le fait que le bouchon (10, 22) agissant comme réducteur a une longueur comprise entre 0,5 et 2 cm.

## Ansprüche

1. Verfahren zur Herstellung einer chromatographischen Säule, umfassend ein Kapillarrohr (10, 22) aus einem Silikamaterial, wobei das Rohr ein Auslaßende (12) und eine Innenwand (17) aufweist, dadurch gekennzeichnet, daß das Verfahren die folgenden Schritte umfaßt:
   (a) Bereitstellung eines chemisch schmelzbaren Materials, welches nach Gießen mikroporös ist und nach Schmelzen an der inneren Wand (17) der Röhre (10, 22) haftet, wobei das chemisch schmelzbare Material eine Zusammensetzung mit einem Silikatanteil enthält,
   (b) Ablagerung einer Menge des chemisch schmelzbaren Materials in der Röhre und
   (c) Gießen eines Verschlußstücks (16) in situ, indem das Material in der Röhre (10, 22) geschmolzen wird und das Material an der Innenwand (17) der Röhre haftet, um eine feste, mikroporöse Masse zu bilden.

2. Verfahren nach Anspruch 1, dadurch gekennzeichnet, daß das schmelzbare Material ein warmschmelzbares Material ist und daß der Schritt des in-situ-Gießens des Stopfens (16) Erwärmung des Materials einschließt.

3. Verfahren nach Anspruch 2, dadurch gekennzeichnet, daß das warmschmelzbare Material aus einer Lösung eines löslichen Silikats hergestellt wird.

4. Verfahren nach Anspruch 3, dadurch gekennzeichnet, daß die Lösung ferner mit dem Silikat gemischtes Formamid enthält.

5. Verfahren nach einem der Ansprüche 3 oder 4, dadurch gekennzeichnet, daß das Silikat Kaliumsilikat ist.

6. Verfahren nach einem der Ansprüche 1 bis 5, dadurch gekennzeichnet, daß der Schritt der Ablagerung des schmelzbaren Materials in dem Rohr (10, 22) das Eintauchen des Auslaßendes (12) des Rohres in das schmelzbare Material und das Einziehenlassen Materials in das Rohr umfaßt.

7. Verfahren nach einem der Ansprüche 1 bis 6, dadurch gekennzeichnet, daß das Verschlußstück in das Ende der Röhre gegossen wird, welches ein Auslaßende (12) für die chromatographische Säule bildet.

8. Verfahren nach Anspruch 7, dadurch gekennzeichnet, daß die Röhre (10, 22) einen Innendurchmesser im Bereich von 10 μm bis 1000 μm aufweist.

9. Verfahren nach einem der Ansprüche 1 bis 8, dadurch gekennzeichnet, daß das Verfahren nach Schritt (c) ferner den Schritt des Füllens der Röhre (10) mit einem Sorptionsmittelbett (18) umfaßt.

10. Verfahren nach einem der Ansprüche 1 bis 8, dadurch gekennzeichnet, daß das Verfahren nach Schritt (c) ferner den Schritt des Beschichtens oder Verbindens der Innenwand (17) des Röhrchens mit einer flüssigen stationären Phase umfaßt.

11. Chromatographiesäule mit einem Kapillarrohr (10, 22) aus Silikamaterial, wobei das Rohr ein chromatographisches Bett (18) enthält sowie eine Innenwand (17), Einlaßende (11) und Auslaßende (12), eine am Auslaßende (12) angebrachte Haltevorrichtung aus einem porösen keramischen Werkstoff, um das Chromatographiebett (18) zu halten, aufweist, dadurch gekennzeichnet, daß die Stütz- bzw. Haltevorrichtung ein Verschlußteil (16) ist, das in situ am Auslaßende (12) gegossen wurde und das an der Innenwand (17) der Röhre haftet, wobei der keramische Werkstoff des Verschlußstücks (16) durch Schmelzen eines chemisch schmelzbaren Materials, welches eine Zusammensetzung mit einer Silikatkomponente enthält, erhalten wird.

12. Chromatographiesäule nach Anspruch 11, dadurch gekennzeichnet, daß die Silikatkomponente Kaliumsilikat ist.

13. Chromatographische Säule nach einem der Ansprüche 11 oder 12, dadurch gekennzeichnet, daß die Röhre einen Innendurchmesser im Bereich von 10 μm bis 1000 μm aufweist.

14. Chromatographiesäule nach Anspruch 13, dadurch gekennzeichnet, daß die Röhre einen Innendurchmesser im Bereich von 150 μm bis 500 μm aufweist.

15. Chromatographiesäule nach einem der Ansprüche 11 bis 14, dadurch gekennzeichnet, daß die Länge des Verschlußstücks im Bereich von 0,5 bis 3,00 mm liegt.

16. Chromatographiesäule nach einem der Ansprüche 11 bis 15, dadurch gekennzeichnet, daß der Stopfen sich ohne Unterbrechung vollständig über den Innendurchmesser des Röhrchens erstreckt.

17. Chromatographiesäule nach einem der Ansprüche 11 bis 15, dadurch gekennzeichnet, daß der sich über den Innendurchmesser der Röhre erstreckende Stopfen durch wenigstens einen Gegenstand, der innerhalb des Stopfens angeordnet ist, unterbrochen wird.

18. Chromatographiesäule zur Verwendung in der superkritischen Fluidchromatographie, umfassend eine Kapillarröhre (10, 22) aus Silikamaterial, wobei die Röhre eine Innenwand (17) aufweist und ein Chromatographiebett (18) oder eine flüssige stationäre Phase enthält, mit der die Innenwand (17) beschichtet oder verbunden ist, sowie ein Einlaßende (11) und ein Auslaßende (12) aufweist, wobei das Auslaßende (12) einen Regel- oder Drosselkörper einschließt, der die kontrollierte Expansion einer überkritischen Flüssigkeit ermöglicht, dadurch gekennzeichnet, daß die Regel- oder Drosselvorrichtung als ein Verschlußstück (16) aus mikroporösem keramischem Material ausgebildet ist, das in situ am Auslaßende (12) der Röhre gegossen wurde und an der Innenwand (17) der Röhre haftet, wobei das keramische Material des Verschlußstücks (16) durch Schmelzen eines chemisch schmelzbaren Materials, welches eine Zusammensetzung mit einem Silikatanteil enthält, erhalten wird.

19. Chromatographiesäule nach Anspruch 18, dadurch gekennzeichnet, daß der Silikatanteil Kaliumsilikat ist.

20. Chromatographiesäule nach einem der Ansprüche 18 oder 19, dadurch gekennzeichnet, daß die Röhre (10, 22) einen Innendurchmesser im Bereich von 10 μm bis 500 μm aufweist.

21. Chromatographiesäule nach Anspruch 20, dadurch gekennzeichnet, daß die Röhre (10, 22) einen Innendurchmesser im Bereich von 50 μm bis 150 μm aufweist.

22. Chromatographiesäule nach einem der Ansprüche 18 bis 21, dadurch gekennzeichnet, daß der als Regler oder Drossel fungierende Stopfen (10, 22) eine Länge im Bereich von 0,5 bis 2 cm aufweist.

FIG. 1

FIG. 2

FIG. 3A

FIG. 3B

FIG. 3C

FIG. 3D

FIG. 4